# EUROPÄISCHE PATENTSCHRIFT

(11) **EP 2 696 433 B1**
(45) Veröffentlichungstag und Bekanntmachung des Hinweises auf die Patenterteilung: **04.03.2015**
(21) Anmeldenummer: 12179636.1
(22) Anmeldetag: 08.08.2012
(51) Int. Cl.: F28F 3/12, H01M 10/613, H01M 10/617, H01M 10/625, H01M 10/6556, H01M 10/6567

(54) **Batteriekühlvorrichtung für eine Fahrzeugbatterie**
Battery cooling device for a car battery
Dispositif de refroidissement de batterie pour une batterie de véhicule

(43) Veröffentlichungstag der Anmeldung: 12.02.2014
(73) Patentinhaber: MAGNA STEYR Battery Systems GmbH & Co OG, 8141 Zettling (AT)
(72) Erfinder: Wünsche, Ralph, 8010 Graz (AT)
(74) Vertreter: Rausch, Gabriele

(56) Entgegenhaltungen:
- WO-A2-2012/028298
- DE-A1-102004 005 394
- DE-A1-102008 027 293
- US-A- 5 467 818
- US-A1- 2005 051 318
- US-A1- 2010 050 685

## Beschreibung

### Gebiet der Erfindung

Die vorliegende Erfindung betrifft eine Batteriekühlvorrichtung für eine Fahrzeugbatterie mit Batteriezellen, umfassend einen Kühlkörper mit Kanälen zur Durchströmung mit einem Kühlmittel, wobei der Kühlkörper zur thermischen Kontaktierung der Batteriezellen vorgesehen ist, wobei an zumindest einem Ende des Kühlkörpers eine Endkappe vorgesehen ist, wobei zumindest einige der Kanäle des Kühlkörpers in die Endkappe münden. Weiters betrifft die Erfindung ein Verfahren zur Herstellung einer Batteriekühlvorrichtung .

Insbesondere Hochvolt-Batterien für Elektro- und Hybridfahrzeuge sind hohen Belastungen durch das Entladen und Beladen (z.B. bei Rekuperation) höherer Energiemengen in kurzen Zeitabschnitten ausgesetzt. Durch den Innenwiderstand der Batteriezellen erwärmen sich derartige Batterien, was zu einer Verringerung der Lebensdauer der Batterien führen kann. Deshalb werden derartige Batteriesystem in der Regel gekühlt, beispielsweise durch eine Flüssigkühlung bei der eine Kühlflüssigkeit in Kanälen eines Kühlkörpers fließt, um so den Kühlkörper zu kühlen, der wiederum in thermischem Kontakt mit den Batteriezellen steht, um deren Wärme abzuführen. Insbesondere zur Umlenkung des Kühlmittels und zur Zuführung und Abführung des Kühlmittels zur Batteriekühlvorrichtung werden manchmal Endkappen an einem oder beiden Enden des Kühlkörpers eingesetzt, beispielsweise sogenannte Kühlmittelverteiler. Es ist auch bekannt, dass Kühlkörper mehrere Kanäle oder Fluten parallel und/oder in Serie aufweisen können, um einen guten Wärmeübergang zwischen dem Kühlmittel und dem Kühlkörper zu ermöglichen.

### Stand der Technik

Eine Batteriekühlvorrichtung der gattungsgemäßen Art ist aus der DE 10 2008 027 293 A1 bekannt. Die Vorrichtung zur Kühlung einer Fahrzeugbatterie umfasst eine Mehrzahl von elektrischen Speicherelementen, und einen Kühlkörper mit Kanälen zur Durchströmung mit einem Fluid, wobei die elektrischen Speicherelemente mit dem Kühlkörper in thermischem Kontakt stehen und Wärme der Speicherelemente an das Fluid übertragbar ist, wobei die der die Kanäle umfassende Kühlkörper als zumindest ein Strangpressprofil ausgebildet ist. An dem Kühlkörper kann endseitig ein Sammler angeordnet sein, wobei zumindest einige der Kanäle in den Sammler münden. Der Kühlkörper kann abgestuft unterschiedlich tief in den Sammler eingreifen um dem Druckabfall des Fluids über die Länge des Sammlers Rechnung zu tragen und eine gleichmäßige Fluiddurchströmung des Kühlkörpers sicher zu stellen.

Aus der US 5 467 818 A, der US 2010/050685 A1 und der US 2005/051318 A1 sind Wärmetauscher bekannt mit Kanälen zur Durchströmung mit einem Kühlmittel und mit Endkappen.

Nachteilig an den bekannten Batteriekühlvorrichtungen ist, dass eine gleichmäßige Fluiddurchströmung entweder gar nicht erreicht wird oder nur mit hohen Fertigungskosten, durch einen komplizierten Aufbau des Kühlkörpers.

### Zusammenfassung der Erfindung

Es ist eine Aufgabe der Erfindung, Batteriekühlvorrichtungen der genannten Art in dieser Hinsicht zu verbessern und insbesondere eine Batteriekühlvorrichtung anzugeben, die eine gleichmäßige Fluiddurchströmung mit einfachen und kostengünstigen Mitteln ermöglicht.

Die Lösung der Aufgabe erfolgt durch eine Batteriekühlvorrichtung für eine Fahrzeugbatterie mit Batteriezellen, umfassend einen Kühlkörper mit Kanälen zur Durchströmung mit einem Kühlmittel, wobei der Kühlkörper zur thermischen Kontaktierung der Batteriezellen vorgesehen ist, wobei an zumindest einem Ende des Kühlkörpers eine Endkappe vorgesehen ist, wobei zumindest einige der Kanäle des Kühlkörpers in die Endkappe münden, wobei an der Endkappe Fortsätze ausgebildet sind, die in zumindest einige der Kanäle des Kühlkörpers hineinragen, wobei die Fortsätze für zumindest zwei verschiedene Kanäle unterschiedlich ausgebildet sind, wobei die Fortsätze für zumindest zwei verschiedene Kanäle unterschiedlich weit in die jeweiligen Kanäle des Kühlkörpers hineinragen.

Erfindungsgemäß ist es vorgesehen eine Endkappe, beispielsweise einen Kühlmittelverteiler oder ein seitliches Abdeckelement mit Fortsätzen auszubilden, wobei die Fortsätze so angeformt sind, dass sie von ihrer Lage und Geometrie bei Aufsetzen der Endkappe auf den Kühlkörper in Kanäle des Kühlkörpers passen. Bevorzugt wird durch einen Fortsatz der entsprechende Kanal nicht völlig verschlossen. Die Fortsätze der Endkappe verdecken so einen Teil des Querschnitts der Kanäle des Kühlkörpers und erzeugen hierdurch eine Drosselwirkung für die jeweiligen Kanäle.

Die Fortsätze für zumindest zwei verschiedene Kanäle sind unterschiedlich ausgebildet. Hierdurch können die Querschnitte unterschiedlicher Kanäle verschieden stark abgedeckt werden, so dass zum Beispiel Kanäle mit ansonsten höherem Druck der Kühlmittelströmung stärker gedrosselt werden, als Kanäle mit an sich geringerem Strömungsdruck.

Die Fortsätze reichen für zumindest zwei verschiedene Kanäle unterschiedlich weit in die jeweiligen Kanäle des Kühlkörpers hinein. Die Fortsätze unterscheiden sich in deren von der Endkappe abstehenden Länge und erreichen so unterschiedlich starke Strömungsreduktionen.

Weiterbildungen der Erfindung sind in den abhängigen Ansprüchen, der Beschreibung sowie den beigefügten Zeichnungen angegeben.

Alternativ oder zusätzlich zur unterschiedlichen Länge können die Fortsätze für zumindest zwei verschiedene Kanäle unterschiedliche Querschnitte aufweisen, also verschiedene Dimensionen und/oder Formen der Querschnitte.

Die Endkappe kann ein Kühlmittelverteiler mit einem Zulauf und einem Ablauf von Kühlmittel sein.

Die Endkappe kann auch ein Abdeckelement sein, durch welches das Kühlmittel umgelenkt wird. Erfindungsgemäße Endkappen können natürlich auch an beiden Enden des Kühlkörpers angebracht sein, zum Beispiel ein Kühlmittelverteiler an einem ersten Ende und ein Abdeckelement am zweiten Ende.

Bevorzugt ist der Kühlkörper als Strangpressprofil, insbesondere aus Aluminium, ausgebildet. Der Kühlkörper kann dann über seine Länge weitgehend homogene Kanäle mit gleichen Querschnitten aufweisen.

Bevorzugt ist die Endkappe aus Kunststoff, insbesondere im Spritzgussverfahren, gebildet. Die Endkappe ist dann bevorzugt mit dem Kühlkörper verklebt.

In einer weiteren Ausführungsform ist die Endkappe aus Aluminium, insbesondere im Druckgussverfahren, gebildet. Die Endkappe ist dann bevorzugt mit dem Kühlkörper verlötet oder verschweißt.

Bevorzugt sind die Fortsätze einstückig mit der Endkappe ausgebildet.

Ein Verfahren zur Herstellung einer erfindungsgemäßen Batteriekühlvorrichtung kann darin bestehen, dass die Endkappe im Spritzgussverfahren oder Druckgussverfahren gefertigt wird und die Fortsätze bei der Fertigung der Endkappe unmittelbar mitgespritzt beziehungsweise mitgegossen werden.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer Batteriekühlvorrichtung mit 3 Kanälen.
- Fig. 2: ist eine schematische Schnittdarstellung entsprechend A-A der Fig. 1, jedoch mit 4 Kanälen.

### Detaillierte Beschreibung der Erfindung

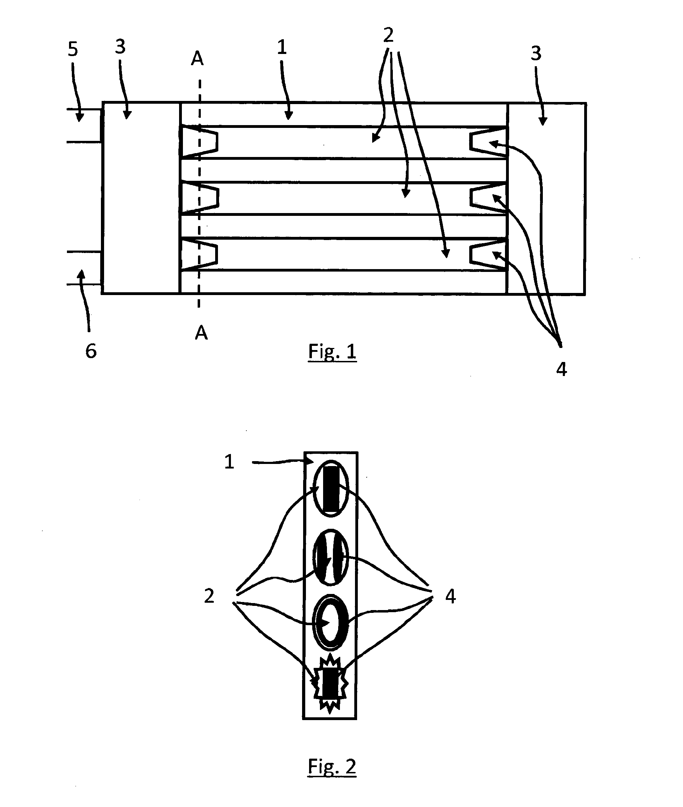

In der Fig. 1 ist eine Batteriekühlvorrichtung für eine Fahrzeugbatterie dargestellt, umfassend einen Kühlkörper 1 mit drei Kanälen 2 zur Durchströmung mit einem Kühlmittel. An beiden Enden des Kühlkörpers 1 ist jeweils eine Endkappe 3 angeordnet, wobei eine der beiden Endkappen 3 über einen Zulauf 5 und einen Ablauf 6 verfügt. Die Kanäle 2 des Kühlkörpers 1 münden in die Endkappen 3.
An den Endkappen 3 sind Fortsätze 4 ausgebildet, die in die Kanäle 2 des Kühlkörpers 1 hineinragen. In einer nicht dargestellten Ausführung ragen erfindungsgemäß die Fortsätze 4 unterschiedlich weit in den Kühlkörper 1 hinein.

Wie in Fig. 2 dargestellt, können die Fortsätze 4 für jeden Kanal 2 unterschiedliche Querschnitte aufweisen. Dargestellt sind in Fig. 2 verschiedenste mögliche Querschnittsformen für die Fortsätze 4, jedoch können sich die Fortsätze 4 für unterschiedliche Kühlkörper 1 auch lediglich in deren Abmessungen unterscheiden.

Die Erfindung ermöglicht somit, durch die Verwendung von Fortsätzen die an zumindest einer Endkappe ausgebildet sind, eine gleichmäßige Kühlmitteldurchströmung mit einfachen und kostengünstigen Mitteln.

## Patentansprüche

1. Batteriekühlvorrichtung für eine Fahrzeugbatterie mit Batteriezellen, umfassend einen Kühlkörper (1) mit Kanälen (2) zur Durchströmung mit einem Kühlmittel, wobei der Kühlkörper (1) zur thermischen Kontaktierung der Batteriezellen vorgesehen ist, wobei an zumindest einem Ende des Kühlkörpers (1) eine Endkappe (3) vorgesehen ist, wobei zumindest einige der Kanäle (2) des Kühlkörpers (1) in die Endkappe (3) münden, wobei an der Endkappe (3) Fortsätze (4) ausgebildet sind, die in zumindest einige der Kanäle (2) des Kühlkörpers (1) hineinragen **dadurch gekennzeichnet, dass** die Fortsätze (4) für zumindest zwei verschiedene Kanäle (2) unterschiedlich ausgebildet sind, wobei die Fortsätze (4) für zumindest zwei verschiedene Kanäle (2) unterschiedlich weit in die jeweiligen Kanäle (2) des Kühlkörpers (1) hineinragen.

2. Batteriekühlvorrichtung nach Anspruch 1,
**dadurch gekennzeichnet, dass** die Fortsätze (4) für zumindest zwei verschiedene Kanäle (2) unterschiedliche Querschnitte aufweisen.

3. Batteriekühlvorrichtung nach zumindest einem der vorhergehenden Ansprüche,
**dadurch gekennzeichnet, dass** die Endkappe (3) ein Kühlmittelverteiler mit einem Zulauf (5) und einem Ablauf (6) von Kühlmittel ist.

4. Batteriekühlvorrichtung nach zumindest einem der Ansprüche 1 bis 2,
**dadurch gekennzeichnet, dass** die Endkappe (3) ein Abdeckelement ist, durch welches das Kühlmittel umgelenkt wird.

5. Batteriekühlvorrichtung nach zumindest einem der vorhergehenden Ansprüche,
**dadurch gekennzeichnet, dass** der Kühlkörper (1) als Strangpressprofil, insbesondere aus Aluminium, ausgebildet ist.

6. Batteriekühlvorrichtung nach zumindest einem der vorhergehenden Ansprüche,
**dadurch gekennzeichnet, dass** die Endkappe (3) aus Kunststoff, insbesondere im Spritzgussverfahren, gebildet ist.

7. Batteriekühlvorrichtung nach zumindest einem der Ansprüche 1 bis 5,
**dadurch gekennzeichnet, dass** die Endkappe (3) aus Aluminium, insbesondere im Druckgussverfahren, gebildet ist.

8. Batteriekühlvorrichtung nach zumindest einem der vorhergehenden Ansprüche,
**dadurch gekennzeichnet, dass** die Fortsätze (4) einstückig mit der Endkappe (3) ausgebildet sind.

9. Verfahren zur Herstellung einer Batteriekühlvorrichtung nach zumindest einem der vorhergehenden Ansprüche,
**dadurch gekennzeichnet, dass** die Endkappe (3) im Spritzgussverfahren oder Druckgussverfahren gefertigt wird und die Fortsätze (4) bei der Fertigung der Endkappe (3) unmittelbar mitgespritzt beziehungsweise mitgegossen werden.

## Claims

1. Battery cooling device for a vehicle battery with battery cells, comprising a cooling body (1) with channels (2) for a coolant to flow through, the cooling body (1) being intended for thermally contacting the battery cells, an end cap (3) being provided at at least one end of the cooling body (1), at least some of the channels (2) of the cooling body (1) opening into the end cap (3), and projections (4) that project into at least some of the channels (2) of the cooling body (1) being formed at the end cap (3), **characterized in that** the projections (4) for at least two different channels (2) are designed differently, the projections (4) for at least two different channels (2) projecting to different extents into the respective channels (2) of the cooling body (1).

2. Battery cooling device according to Claim 1, **characterized in that** the projections (4) for at least two different channels (2) have different cross sections.

3. Battery cooling device according to at least one of the preceding claims,
**characterized in that** the end cap (3) is a coolant distributor with an inlet (5) and an outlet (6) for coolant.

4. Battery cooling device according to at least either Claim 1 or Claim 2,
**characterized in that** the end cap (3) is a covering element, by which the coolant is deflected.

5. Battery cooling device according to at least one of the preceding claims,
**characterized in that** the cooling body (1) is formed as an extruded section, in particular from aluminium.

6. Battery cooling device according to at least one of the preceding claims,
**characterized in that** the end cap (3) is formed from plastic, in particular by the injection-moulding process.

7. Battery cooling device according to at least one of Claims 1 to 5,
**characterized in that** the end cap (3) is formed from aluminium, in particular by the pressure diecasting process.

8. Battery cooling device according to at least one of the preceding claims,
**characterized in that** the projections (4) are formed in one piece with the end cap (3).

9. Method for producing a battery cooling device according to at least one of the preceding claims, **characterized in that** the end cap (3) is produced by the injection-moulding process or diecasting process and, in the production of the end cap (3), the projections (4) are at the same time also moulded or cast along with it.

## Revendications

1. Dispositif de refroidissement de batterie pour une batterie de véhicule comprenant des cellules de batterie, comportant un corps de refroidissement (1) pourvu de canaux (2) pour l'écoulement d'un réfrigérant, le corps de refroidissement (1) étant prévu pour la mise en contact thermique des cellules de batterie, un capuchon d'extrémité (3) étant prévu à au moins une extrémité du corps de refroidissement (1), au moins certains parmi les canaux (2) du corps de refroidissement (1) débouchant dans le capuchon d'extrémité (3), des saillies (4) étant réalisées sur le capuchon d'extrémité (3), lesquelles pénètrent dans au moins certains parmi les canaux (2) du corps de refroidissement (1), **caractérisé en ce que** les saillies (4) sont réalisées différemment pour au moins deux canaux différents (2), les saillies (4) pour au moins deux canaux différents (2) pénétrant sur des distances différentes dans les canaux (2) respectifs du corps de refroidissement (1).

2. Dispositif de refroidissement de batterie selon la revendication 1,
**caractérisé en ce que** les saillies (4) pour au moins deux canaux différents (2) présentent des sections transversales différentes.

3. Dispositif de refroidissement de batterie selon au moins l'une quelconque des revendications précédentes,
**caractérisé en ce que** le capuchon d'extrémité (3) est un distributeur de réfrigérant comprenant une admission (5) et une évacuation (6).

4. Dispositif de refroidissement de batterie selon au moins l'une quelconque des revendications 1 et 2,
**caractérisé en ce que** le capuchon d'extrémité (3) est un élément de recouvrement au moyen duquel le réfrigérant est dévié.

5. Dispositif de refroidissement de batterie selon au moins l'une quelconque des revendications précédentes,
**caractérisé en ce que** le corps de refroidissement (1) est réalisé sous forme de profilé extrudé, en particulier en aluminium.

6. Dispositif de refroidissement de batterie selon au moins l'une quelconque des revendications précédentes, **caractérisé en ce que** le capuchon d'extrémité (3) est formé à partir de plastique, en particulier à l'aide d'un procédé de moulage par injection.

7. Dispositif de refroidissement de batterie selon au moins l'une quelconque des revendications 1 à 5, **caractérisé en ce que** le capuchon d'extrémité (3) est formé à partir d'aluminium, en particulier à l'aide d'un procédé de coulage sous pression.

8. Dispositif de refroidissement de batterie selon au moins l'une quelconque des revendications précédentes,
**caractérisé en ce que** les saillies (4) sont réalisées d'un seul tenant avec le capuchon d'extrémité (3).

9. Procédé de production d'un dispositif de refroidissement de batterie selon au moins l'une quelconque des revendications précédentes,
**caractérisé en ce que** le capuchon d'extrémité (3) est fabriqué à l'aide d'un procédé de moulage par injection ou d'un procédé de coulage sous pression et les saillies (4) sont, lors de la fabrication du capuchon d'extrémité (3), injectées ou coulées conjointement directement.
